(19) Europäisches Patentamt
European Patent Office
Office européen des brevets

(11) Numéro de publication: **0 188 394 B1**

(12) **FASCICULE DE BREVET EUROPEEN**

(45) Date de publication du fascicule du brevet: **01.06.88**

(51) Int. Cl.⁴: **C 01 F 11/00**, C 01 F 17/00, B 01 D 13/00, C 22 B 3/00, C 22 B 59/00

(21) Numéro de dépôt: **86400049.2**

(22) Date de dépôt: **10.01.86**

(54) **Procédé de purification de solutions aqueses de sels de terres rares par extraction liquide-liquide.**

(30) Priorité: **15.01.85 FR 8500495**

(43) Date de publication de la demande: **23.07.86 Bulletin 86/30**

(45) Mention de la délivrance du brevet: **01.06.88 Bulletin 88/22**

(84) Etats contractants désignés: **AT BE CH DE FR GB IT LI LU NL SE**

(56) Documents cités:
**US - A - 3 622 577**
**US - A - 3 687 978**

**JOURNAL OF MEMBRANE SCIENCE, vol. 17, no. 1, janvier 1984, pages 97-107, Elsevier Science Publishers B.V., Amsterdam, NL; R.A. BARTSCH et al.: "Separation of metals by liquid surfactant membranes containing crown ether carboxylic acids"**
**JOURNAL OF MEMBRANE SCIENCE, vol. 11, no. 2, août 1982, pages 169-175, Elsevier Scientific Publishing Cy., Amsterdam, NL; K.H. PANNELL et al.: "Dibenzo-crown facilitated transport across a CHCL3 liquid membrane"**
**JOURNAL OF MEMBRANE SCIENCE, vol. 11, no. 2, août 1982, pages 157-168, Elsevier Scientific Publishing Cy., Amsterdam, NL; S. YOSHIDA et al.: "Kinetics of partition between aqueous solutions of salts and bulk liquid membranes containing neutral carriers"**
**CHEMICAL ABSTRACTS, vol. 87, 1977, page 309, résumé no. 27938v, Columbus, Ohio, US; T. KIMURA et al.: "Separation of strontium ion from a large amount of calcium ion by the use of a macrocyclic ether"**
**CHEMICAL ABSTRACTS, vol. 89, 1978, page 671, résumé no. 156824v, Columbus, Ohio, US; W.A. LADA et al.: "Separation of alkaline earth metals by extraction chromatography with dibenzo-18-crown-6"**

(73) Titulaire: **RHONE-POULENC CHIMIE, 25, quai Paul Doumer, F-92408 Courbevoie Cédex (FR)**

(72) Inventeur: **Rollat, Alain, 20, rue Duhesme, F-75018 Paris (FR)**
Inventeur: **Sabot, Jean-Louis, 3 avenue Pascal, F-78600 Maisons-Laffitte (FR)**
Inventeur: **Burgard, Michel, 9, rue de la Ménagerie, F-67100 Strasbourg (FR)**
Inventeur: **Delloye, Thierry, 61, avenue Ambroise Croisat, F-77270 Villeparisis (FR)**

(74) Mandataire: **Dutruc-Rosset, Marie-Claude et al, RHONE-POULENC INTERSERVICES Service Brevets Chimie 25, Quai Paul Doumer, F-92408 Courbevoie Cédex (FR)**

(56) Documents cités: (suite)
**CHEMICAL ABSTRACTS, vol. 91, no. 4, 23 juillet 1979, page 487, résumé no. 28109v, Columbus, Ohio, US; Y TAKEDA et al.: "Separation of barium(II) from strontium(II) by means of the solvent extraction with dibenzo-24-crown-8"**
**CHEMICAL ABSTRACTS, vol. 91, 1979, page 745, résumé no. 67852b, Columbus, Ohio, US; W. SMULEK et al.: "Separation of alkali and alkaline earth metals by polyethers using extraction chromatography. Effect of diluent"**
**CHEMICAL ABSTRACTS, vol. 91, 1979, page 429, résumé no. 199641s, Columbus, Ohio, US; T. SEKINE et al.: "Solvent extraction of lead (II) and strontium (II) as dibenzo-18-crown-6 complexes with picrate ion"**
**CHEMICAL ABSTRACTS, vol. 92, 1980, page 638, résumé no. 190518v, Columbus, Ohio, US; N.S. POONIA et al.: "Ligation and charge separation of alkali and alkaline earth cations with benzo-15-crown-5"**
**CHEMICAL ABSTRACTS, vol. 98, 1983, page 727, résumé no. 118725s, Columbus, Ohio, US; N.P. ALEKSYUK et al.: "Comparative study of solvent extraction of mixed-ligand complexes of metal cations with sulfophtalein dyes"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

**Description**

La présente invention a pour objet un procédé de purification de solutions aqueuses nitriques de terres rares contenant entre autres des cations alcalino-terreux par extraction liquide-liquide.

L'expression «terres rares» utilisée conformément à l'invention comprend les éléments de terres rares appelés lanthanides ayant des numéros atomiques de 57 à 71 inclus et l'yttrium de numéro atomique égal à 39.

Les métaux de terres rares se trouvent généralement associés dans divers minerais tels que la monazite, la bastnaesite, le xénotime ou divers concentrats; un moyen de séparer les différentes terres rares entre elles consiste à effectuer des opérations d'extraction liquide-liquide successives à partir de solutions aqueuses de sels desdites terres rares.

Il est nécessaire que lesdites solutions aqueuses de sels mises en œuvres soient d'une pureté suffisante pour que les opérations d'extraction se déroulent favorablement; de même les différentes terres rares séparées ne peuvent être utilisées dans certaines applications que si elles ne contiennent qu'un très faible taux d'impureté et de radioactivité.

Parmi les métaux accompagnant les terres rares dans les solutions aqueuses de sels de terres rares, on trouve notamment le thorium, l'uranium et des métaux divers tels que les métaux alcalins, alcalino-terreux, le fer, le manganèse, le titane ...

Comme métaux alcalino-terreux, on note la présence de calcium, baryum et du radium, produit de filiation du thorium $Th^{232}$ et de l'uranium $U^{238}$.

Habituellement, pour obtenir des éléments terres rares de haute pureté, on les sépare des autres métaux par extraction dans une phase organique contenant un agent d'extraction.

Or compte-tenue du fait que les terres rares sont en quantités prépondérantes, il serait plus intéressant d'éliminer les impuretés constituées par les autres éléments métalliques.

Or si l'on sait extraire préférentiellement selon un procédé d'extraction liquide-liquide certaines impurétés métalliques notamment le fer, jusqu'à présent le problème de la séparation des terres rares et des alcalino-terreux par extraction de ces derniers, n'a pas été résolu.

La présente invention a précisément pour objet un procédé de purification de solutions aqueuses de sels de terres rares contenant au moins une terre rare et au moins un alcalino-terreux par extraction liquide-liquide entre une phase aqueuse contenant les sels de ces métaux et une phase organique ceractérisé par le fait que l'on met en contact une phase aqueuse nitrique contenant une ou plusieurs terres rares et un ou plusieurs alcalino-terreux avec une phase organique contenant un agent d'extraction de ou des cations alcalino-terreux constritué par au moins un agent solvatant du type polyéther.

Dans l'exposé de l'invention, on dénomme de manière simplifiée par «terre rare», le cation terre rare et par «alcalino terreux», le cation alcalino-terreux $M^{2+}$.

L'agent d'extraction utilisé conformément à l'invention peut être un composé macrocyclique du type polyéther habituellement dénommé éther-couronne.

Ledit composé macrocyclique est un polyéther cyclique ayant une structure basique cyclique contenant de 6 à 60 atomes de carbone et de 3 à 20 atomes d'oxygène dont au moins deux atomes d'oxygène sont rattachés à des atomes de carbone vicinaux d'un cycle hydrocarboné aromatique ou non et les autres atomes d'oxygène sont liés entre eux par l'intermédiaire de groupement hydrocarbonés comportant au moins deux atomes de carbone.

Les polyéthers cycliques mis en œuvre selon l'invention répondent à la formule (I):

$$-\!\!\left(R - O\right)\!\!-_a \qquad (I)$$

dans laquelle a est compris entre 3 et 20, le symbole R représente un radical $-CH_2-CH_2-$ ou $-CH_2-CH_2-CH_2-$ et au moins un radical cyclique choisi parmi les radicaux:

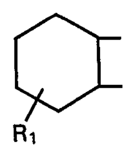
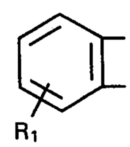

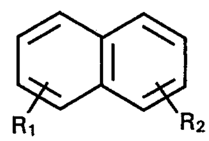

avec $R_1$ et $R_2$ identiques ou différents représentant un atome d'hydrogène ou un ou plusieurs substituants tels qu'un radical alkyle ayant de 1 à 12 atomes de carbone, un atome d'halogène , un radical nitro ou hydroxy.

Parmi les composés de formule (I), on choisit ceux qui répondent à la formule (I) dans laquelle a est compris entre 5 et 10, R ayant la signification donnée précédemment et $R_1$ et $R_2$ représentent un atome d'hydrogène ou un radical alkyle ayant de 1 à 9 atomes de carbone.

A titre d'exemples spécifiques de polyéthers cycliques convenant à l'invention, on peut citer ceux des groupes suivants:

— Groupe A: 15-C-5 à 18-C-5

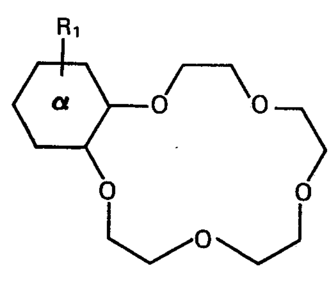

(II)

dans la formule (II), α représente un groupe cyclohexyl, benzo, naphtho-2,3 ou décalyl-2,3 et $R_1$ représente un atome d'hydrogène ou un radical alkyle ayant de 1 à 9 atomes de carbone

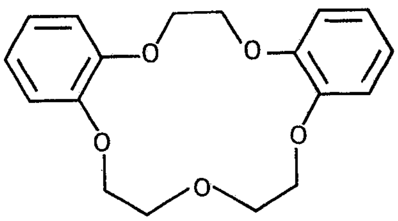

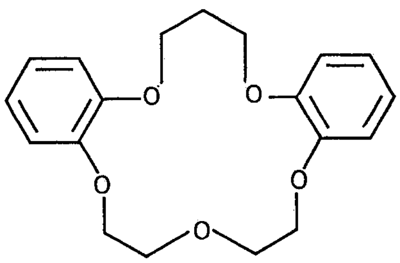

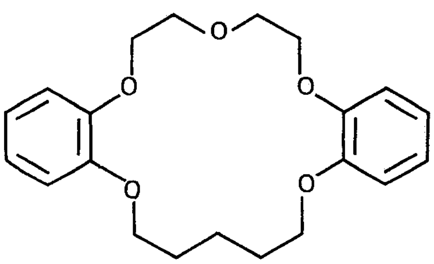

— Groupe B: 18-C-6 à 19-C-6

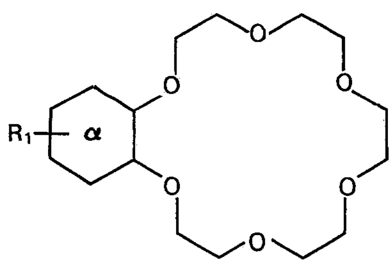

(III)

dans la formule (III), α représente un groupe cyclohexyl, benzo, naphtho-2,3 et $R_1$ représente un atome d'hydrogène ou un radical alkyle ayant de 1 à 9 atomes de carbone.

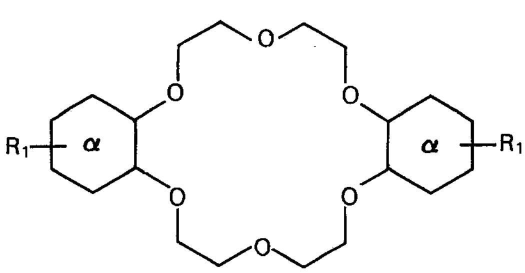

(IV)

dans la formule (IV), α représente un groupe cyclohexyl, benzo, naphtho-2,3 et $R_1$ représente un atome d'hydrogène ou un radical alkyle ayant de 1 à 9 atomes de carbone.

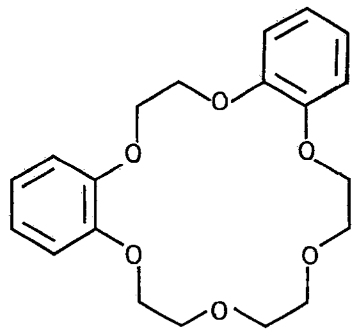

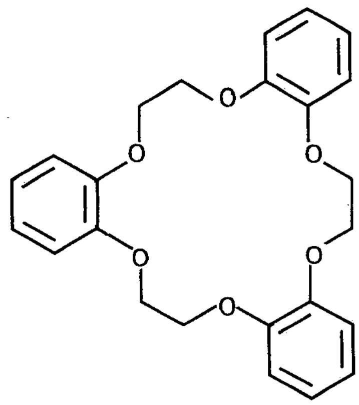

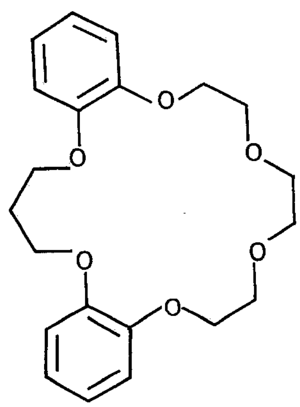

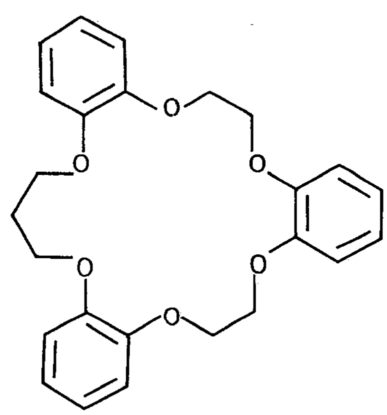

— Groupe C: 21-C-7

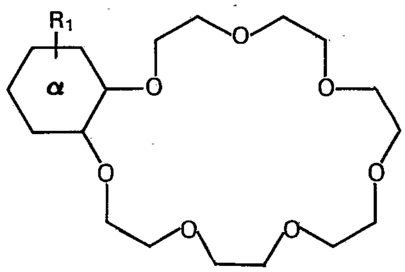

(V)

dans la formule (V), α représente un groupe cyclohexyl, benzo ou naphtho-2,3 et $R_1$ représente un atome d'hydrogène ou un radical alkyle ayant de 1 à 9 atomes de carbone.

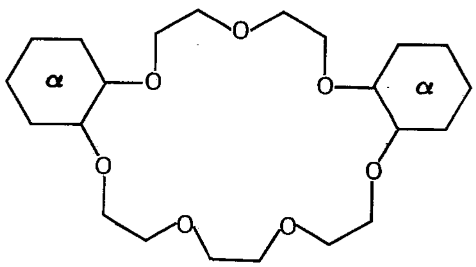

(VI)

dans la formule (VI), α représente un groupe cyclohexyl ou benzo.

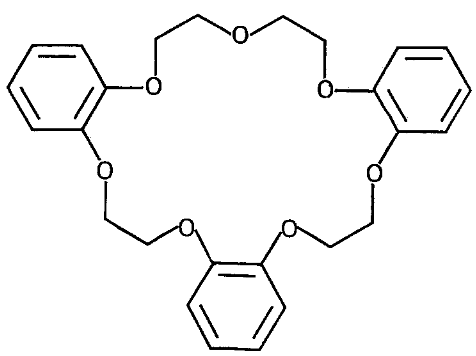

— Groupe D: 24-C-8

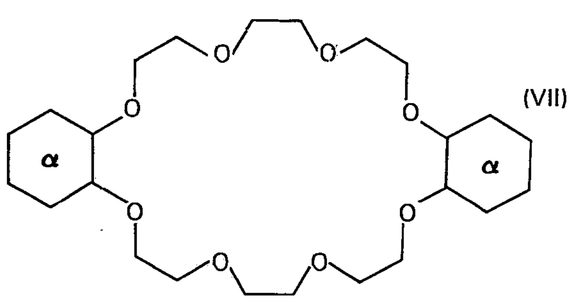

(VII)

dans la formule (VII), α représente un groupe cyclohexyl, benzo ou naphtho-2,3.

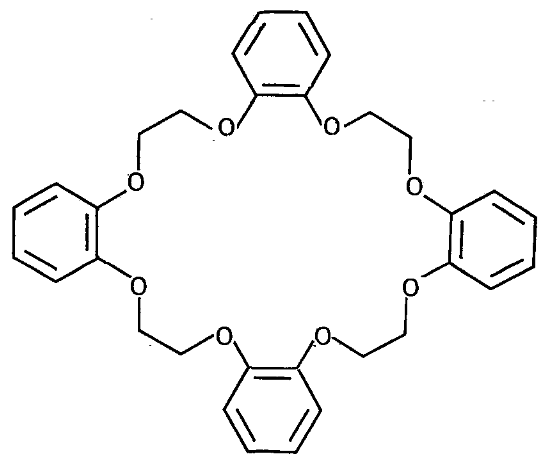

— Groupe E: 30-C-10

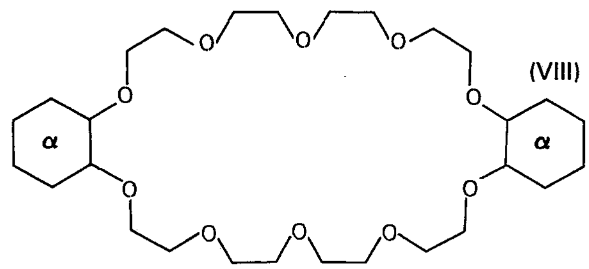

(VIII)

dans la formule (VIII), α représente un groupe cyclohexyl ou benzo.

On utilise dans le procédé de l'invention encore plus préférentiellement les composés de macrocycliques suivants:

— celui qui répond à la formule (III) dans laquelle α représente un groupe benzo et $R_1$ un radical nonyle que l'on dénommera couramment et d'une manière connue nonyl-4 benzo-18-C-6

— ceux qui répondent à la formule (IV) dans laquelle α représente un groupe cyclohexyl ou benzo et $R_1$ un atome d'hydrogène, dénommés respectivement dicyclohexyl-18-C-6 et dibenzo-18-C-6

— celui qui répond à la formule (V) dans laquelle α représente un gropue benzo et $R_1$ un radical nonyle dénommé nonyl-21-C-7

— celui qui répond à la formule (VI) dans laquelle α représente un groupe cyclohexyl et $R_1$ un atome d'hydrogène, dénommé dicyclohexyl-21-C-7

— celui qui répond à la formule (VII) dans laquelle α représente un groupe cyclohexyl et $R_1$ un atome d'hydrogène, dénommé dicyclohexyl-24-C-8.

La préparation des différents types de composés macrocycliques tels que ceux mentionné ci-avant a fait l'objet de nombreuses publications. On peut se reporter aux travaux de PEDERSEN J.A.C.S. 89, 7017 (1967) et J.A.C.S. 89, 2495 (1967) et J.J. CHRISTENSEN et col. Chemical Reviews 74, 350 (1974).

Le ou les alcalino-terreux extraits en phase organique contenant au moins un agent solvatant du type polyéther et un diluant organique peuvent être récupérés en phase aqueuse à l'aide d'une solution de réextraction, permettant ainsi la régénération de la phase organique. La nature du diluant et de la solution de réextraction sera précisée ultérieurement.

Une variante préférentielle de l'invention, consiste à mettre en œuvre le procédé de purification de l'invention par extraction liquide-liquide selon une technique d'extraction à l'aide d'une membrane liquide.

Plus précisément le procédé de purification des solutions aqueuses de sels de terres rares contenant au moins une terre rare et au moins un alcalino-terreux est caractérisé par le fait qu'il consiste:

— a former une membrane liquide avec une phase organique contenant au moins un agent solvatant du type polyéther

— a mettre en contact une face de ladite membrane avec la phase aqueuse nitrique contenant une ou plusieurs terres rares et un ou plusieurs alcalino-terreux: ladite phase sera appelée solution d'alimentation

— à mettre en contact l'autre face de la membrane avec une solution de réextraction.

On met en œuvre selon l'invention, une membrane liquide obtenue le plus souvent par imprégnation d'une membrane poreuse à l'aide d'une phase organique contenant généralement outre l'agent d'extraction, un diluant organique.

Les critères qui président au choix d'une membrane poreuse qui sera par la suite imprégnée sont les suivants:

— la membrane poreuse doit être formée d'une matière stable chimiquement vis-à-vis de la phase aqueuse nitrique contenant les cations à séparer et de la solution de réextraction. Elle doit résister phyiquement et chimiquement à la phase organique qui forme la membrane liquide.

On peut faire appel aux membranes poreuses conventionelles telles que membranes plastiques poreuses, membranes de métal poreux ou de verre poreux, de céramiques poreuses, de papier-filtre.

D'une manière préférentielle, on emploie des membranes de polymères inertes tels que le polypropylène, le polytétrafluoroéthylène (P.T.F.E.), le polydifluorovinylidène (P.V.D.F.), le polyéthylène, une polysulfone ou l'oxyde de polyphénylène.

Les trois premiers polymères cités constituent des matières premières de choix.

— la membrane doit être très poreuse et avoir des pores fins et continus. Il est intéressant de mettre en œuvre une membrane ayant une porosité d'au moins 10% pouvant aller jusqu'à 95%. Compte-tenue du fait qu'il y a un compromis à respecter entre la porosité qui doit être la plus élevée et la résistance mécanique qui doit être bonne, on choisit de préférence une membrane poreuse ayant un volume poreux compris entre 20 et 60%: le volume poreux étant mesuré au porosimètre à mercure à 2000 bars ($2202,65 \cdot 10^6$ Pa);

— la membrane poreuse qui est imprégnée par la phase organique doit présenter des pores très fins afin qu'ils retiennent la phase organique formant la membrane liquide, par capillarité. Le diamètre moyen des pores est de préférence compris entre 0,01 et 5 μm. Ainsi si le diamètre des pores est inférieur à 0,01 μm, le complexe formé circule difficilement du fait que les pores sont trop petits. Dans le cas d'un diamètre de pores supérieur à 5 μm, la phase organique est difficilement retenue. D'une manière préférentielle, on choisit un diamètre de pores compris entre 0,02 et 0,5 μm;

— la membrane doit être constituée d'une matière aisément mouillable par la phase organique et difficilement mouillable par les phases aqueuses constituées par la solution d'alimentation et la solution de réextraction. En d'autres termes, la matière doit être hydrophobe et présenter une tension superficielle élevée à l'eau afin que l'eau ne déplace pas la phase organique imprégnant la membrane;

— la membrane doit être mince afin de favoriser la cinétique de réaction. Cependant, il existe une limite inférieure d'épaisseur liée au fait qu'une membrane trop mince manque de résistance mécanique et provoque une moindre retenue de la phase organique. On met en œuvre de préférence une membrane dont l'épaisseur varie entre 50 et 700 μm et, de préférence, comprise entre 50 et 500 μm.

La membrane poreuse est imprégnée par la phase organique contenant l'agent d'extraction et un diluant organique.

Le diluant organique est non miscible à la solution d'alimentation ou y est difficilement soluble mais il doit pouvoir dissoudre le complexe formé entre l'agent d'extraction et les cations alcalino-terreux $M^{2+}$: magnésium, calcium, strontium, baryum, radium.

Des exemples de diluant organique susceptible d'être mis en œuvre selon l'invention sont: les hydrocarbures aromatiques comme par exemple le benzène, le toluène, l'éthylbenzène, le xylène et les coupes pétrolières du type Solvesso (marque déposée par la Société EXXON) notamment le Solvesso 100 qui contient essentiellement un mélange de méthyléthyl et triméthylbenzène et le Solvesso 150 qui renferme un mélange d'alkylbenzènes en particulier de diméthyléthylbenzène et de tétraméthylbenzène; les hydrocarbures halogénés tels que le chloroforme, le chlorure de méthylène, le dichloro-1,2 éthane, le dichloro-1,1 éthane, le tétrachlorure de carbone, le tétrachloro-1,1,2,2 éthane, le tétrachloro-1,1,1,2 éthane, le chlorobenzène, le chloro-2 toluène, le chloro-3 toluène, le chloro-4 toluène, le chloro-1 éthylbenzène, le chloro-1 diméthyl-2,4 benzène, le chloro-1 diméthyl-3,5 benzène, le chloro-2 diméthyl-1,4 benzène, le chloro-4 diméthyl-1,2 benzène, le chloro-2 triméthyl-1,3,5 benzène, le dichloro-1,2 benzène, le dichloro-1,3 benzène, le dichloro-1,4 benzène, le bis (chlorométhyl)-1,2 benzène, le bis (chlorométhyl)-1,3 benzène, le bis (chlorométhyl)-1,4 benzène, le chloro-1 fluoro-2 benzène, le chloro-1 fluoro-4 benzène, le chloro-1 nitro-2 benzène, le chloro-1 nitro-3 benzène, le chloro-1 nitro-4 benzène, le bromo-1 chloro-2 benzène, le bromo-1 chloro-3 benzène, le bromo-1 chloro-4 benzène, le bromo-1 dichloro-2,3 benzène, le bromo-1 dichloro-3,5 benzène, le bromo-2 dichloro-1,3 benzène, le bromo-2 dichloro-1,4

benzène, le bromo-4 dichloro-1,2 benzène, le chloro-1 dihydroxy-2,3 benzène, le chloro-1 dihydroxy-2,4 benzène, le chloro-1 dihydroxy-3,5 benzène, le chloro-2 dihydroxy-1,3 benzène, le chloro-2 dihydroxy-1,4 benzène, le chloro-4 dihydroxy-1,2 benzène, le chloro-1 diméthyl-2,3 hydroxy-4 benzène et isomères, le dichloro-1,2 dihydroxy-4,5 benzène, le dichloro-1,3 dihydroxy-2,5 benzène, le dichloro-1,4 dihydroxy-2,5 benzène, le dichloro-1,5 dihydroxy-2,3 benzène, le dichloro-1,5 dihydroxy-2,4 benzène, le dichloro-2,3 dihydroxy-1,4 benzène, le bromo-1 tert butyl-4 benzène. On peut également utiliser des alcools lourds ayant de 4 à 12 atomes de carbone, du butanol au dodécanol ou bien employer d'autres solvants aromatiques tels que les nitrobenzènes ou les phénols et diphénols tels que, par exemple, le phénol, les crésols les triméthylphénols, l'hydroquinone, le pyrocatéchol, le résorcinol ou bien les nitrophénols.

On peut également mettre en œuvre un mélange de diluants.

La concentration dans le diluant organique de l'agent d'extraction n'est pas un facteur critique selon l'invention. On recherche évidemment une concentration la plus élevée possible. Dans le cas de mise en œuvre d'un éther-couronne, compte-tenu de sa solubilité, elle se situe aux environs de $10^{-3}$ mole/litre à 2 moles/litre.

La membrane poreuse imprégnée par la phase organique telle que définie est mise en contact d'un côté avec la solution d'alimentation contenant les cations à séparer et de l'autre côté avec la solution de réextraction.

La solution d'alimentation peut être constituée par une solution aqueuse provenant de la redissolution par l'acide nitrique, des hydroxydes obtenus à la suite de l'attaque sodique des minerais contenant les terres rares tels que la monazite, la bastnaesite et le xénotime. On peut également mettre en œuvre toute autre solution de sels de terres rares après changement de l'anion présent en anion nitrate.

Le procédé de l'invention s'applique aux solutions telles quelles ou bien après leur avoir fait subir une concentration préalable. Généralement, on met en œuvre le procédé d'extraction liquide-liquide sur des solutions aqueuses nitriques contenant des terres rares ayant une concentration exprimée en oxydes de terres rares variant entre 20 g/l et 500 g/l. Il est préférable de partir de solutions les plus concentrées possibles: une concentration comprise entre 100 g/l et 500 g/l est choisie préférentiellement. Elles présentent une acidité qui n'est pas critique variant généralement entre 0,01 et 3,0 N.

La solution de réextraction est non miscible à la phase organique ou y est difficilement soluble. Généralement, on emploie l'eau ou bien une solution aqueuse d'un agent complexant ayant la propriété de former un complexe soluble ou insoluble avec les cations alcalino-terreux.

On peut faire appel à des complexants minéraux tels que orthophosphates ou pyrophosphates de sodium ou de potassium, sulfate de sodium ou bien à des complexants organiques et tout particulièrement aux acides aminopolyacétiques (ou à leurs sels), tels que par exemple:

l'acide N-hydroxyéthyléthylènediaminetriacétique (H.E.D.T.A.),
l'acide éthylènediaminetétracétique (E.D.T.A.),
l'acide diaminocyclohexanetétracétique (D.C.T.A.),
l'acide diéthylènetriaminopentacétique (D.T.P.A.),
l'acide triéthylènetétraminohexacétique (T.T.H.A.),

La concentration en agent complexant de la solution de réextraction peut varier sans aucun inconvénient entre $10^{-3}$ à 1 mole/litre et est de préférence comprise entre $10^{-2}$ et $10^{-1}$ mole/litre.

On précisera, ci-après, brièvement le principe d'extraction à l'aide d'un éther-couronne mis en œuvre selon le mode de réalisation préféré de l'invention.

On met en contact la solution d'alimentation avec la phase organique formant la membrane liquide.

A l'interface, il se produit la réaction (1)

$$M^{2+} + 2\,NO_3^- + \overline{E} \underset{2}{\overset{1}{\rightleftarrows}} \overline{E\,M^{2+}, 2\,NO_3^-} \qquad (1)$$

Le complexe formé entre le cation alcalino-terreux et l'éther-couronne E diffuse au travers de la membrane liquide et atteint l'autre interface où il est mis en contact avec la solution de réextraction.

Le cation métallique $M^{2+}$ est extrait dans la solution de réextraction: la réaction (1) étant déplacée dans les sens 2.

L'éther-couronne rétrodiffuse vers le premier interface de la membrane liquide.

Le cation $M^{2+}$ est extrait dans la solution de réextraction. Si l'on ajoute un agent complexant dans ladite solution, la réaction (1) est déplacée dans le sens 2 ce qui facilite la réextraction de l'ion $M^{2+}$.

D'une manière pratique, on réalise le transfert des cations alcalino-terreux au travers de la membrane dans des conditions de température qui varient entre 10°C et 80°C. Préférentiellement, on travaille à température ambiante de l'ordre de 15°C à 25°C.

Le débit de la phase aqueuse dépend de nombreux facteurs qui sont:

— la concentration en cations alcalino-terreux de la solution d'alimentation
— le degré de pureté souhaité
— la surface offerte par la membrane poreuse.

Il est également lié à la géométrie de l'appareillage et doit être déterminé dans chaque cas particulier.

Le procédé de l'invention est mis en œuvre dans un appareillage connu.

On peut utiliser des cellules à membranes planes ou des modules à fibres creuses. On se référera pour plus de détails, à la littérature et notamment à la demande de brevet français publié sous le n° 2 451 764 ou au brevet américain 4 051 230. On précisera seulement qu'il est préférable d'utiliser des fibres creuses comme structure de membrane en raison du rapport surface/volume qui est beaucoup plus favorable que dans le cas d'une membrane plane ou sous forme d'un jonc. On peut mettre en œuvre des fibres creuses ayant par exemple un diamètre interne compris entre 0,125 et 2,5 mm et une épaisseur de l'ordre de 50 à 500 µm.

Il est à noter que le procédé de l'invention s'applique tout-à-fait bien à l'élimination du calcium, du

baryum et du radium $Ra^{228}$ et $Ra^{226}$ contenus dans les solutions aqueuses résultant de la redissolution nitrique des hydroxydes de terres rares obtenus après attaques sodique de leurs minérais.

On donne ci-après des exemples illustrant la mise en œuvre de l'invention.

*Exemples 1 a 4*

*Procédé de purification d'une solution aqueuse de nitrate de lanthane contenant différents alcalino-terreux*

L'extraction des ions alcalino-terreux est réalisée à l'aide d'une membrane liquide épaisse.

On utilise une cellule de transport d'ions représentée par la figure 1.

Cette cellule est constituée par un récipient cylindrique 1 de diamètre interne de 8 cm à double-enveloppe dans laquelle circule de l'eau à 25°C qui arrive par le conduit 2 et ressort par le conduit 3.

Dans ledit récipient, plonge une cloche cylindrique en verre 4 de diamètre égal à 5 cm. La cloche est munie dans sa partie supérieure d'une ouverture 5 permettant l'introduction de la phase aqueuse d'alimentation.

Un moteur synchrone 6 entraîne la cloche cylindrique à une vitesse constante de 200 tours/minute.

Un mélangeur statique 7 est disposé au fond de la cellule.

Dans le récipient cylindrique 1, on introduit 150 $cm^3$ d'une phase organique Y contenant comme agent solvatant, un éther-couronne le dicyclohexyl--18-C-6 (DC-18-C-6) dont la concentration sera précisée pour chaque exemple dans le tableau I et un diluant qui est le chloroforme.

On introduit par l'ouverture 5, 40 $cm^3$ d'une phase aqueuse nitrique d'alimentation X dont la composition est donnée dans le tableau I et simultanément on introduit à l'extérieur de la cloche 4, 100 $cm^3$ d'une solution de réextraction Z qui est de l'eau désionisée.

La phase organique Y se trouve entre la phase aqueuse d'alimentation X et la solution de réextraction Z forme ainsi une membrane liquide.

On met en route le moteur synchrone 6 provoquant ainsi la rotation de la cloche de verre 4. La cloche en tournant homogénéise les phases, tout en maintenant l'interface plan.

L'interface phase aqueuse d'alimentation X/membrane liquide Y a une surface de 15,9 $cm^2$ et l'interface membrane liquide Y/solution de réextraction Z de 30,7 $cm^2$.

On maintient une température de 25°C tout au long de l'extraction.

Au bord de 7 heures, on détermine la quantité de cations alcalino-terreux et terres rares transférés de la phase d'alimentation X dans la solution de réextraction 2. Le dosage des alcalino-terreux est effectué par spectrophotomètrie d'absorption atomique flamme et celui des terres rares est réalisé par fluorescence X.

Les résultats obtenus sont consignés dans le tableau I.

TABLEAU I

| N° exemple | Phase aqueuse d'alimentation X | Membrane liquide Y | Solution aqueuse de réextraction Z | % de $M^{2+}$ transféré en 7 heures | % de $La^{3+}$ transféré en 7 heures |
|---|---|---|---|---|---|
| 1 | $Ca(NO_3)_2$ 0,02 M<br>$La(NO_3)_3$ 0,33 M | DC-18-C-6 0,01 M<br>$CH\ Cl_3$ | eau | 68 | < 0,1 |
| 2 | $Sr(NO_3)_2$ 0,02 M<br>$La(NO_3)_3$ 0,17 M | DC-18-C-6 0,001 M<br>$CH\ Cl_3$ | eau | 73 | < 0,1 |
| 3 | $Sr(NO_3)_2$ 0,02 M<br>$La(NO_3)_3$ 0,33 M | DC-18-C-6 0,001 M<br>$CH\ Cl_3$ | eau | 93 | < 0,1 |
| 4 | $Ba(NO_3)_2$ 0,02 M<br>$La(No_3)_3$ 0,33 M | DC-18-C-6 0,001 M<br>$CH\ Cl_3$ | eau | 82 | < 0,1 |

*Exemples 5 à 10*

*Procédé de purification d'une solution aqueuse de nitrate de samarium contenant du strontium*

L'extraction du strontium est effectuée à l'aide d'une membrane liquide plane obtenue par imprégnation d'un support poreux.

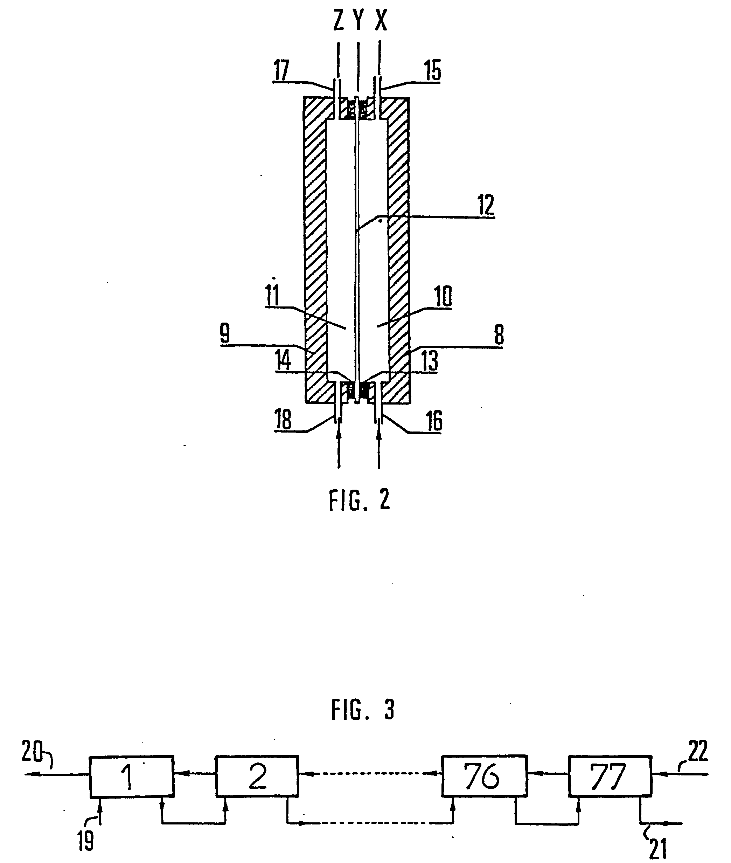

On utilise une cellule de transfert représentée par la figure 2 qui est formée de deux compartiments 8 et 9 en polychlorure de vinyle. Les compartiments délimitent deux cavités 10 et 11 parallélépipédiques (92 mm × 75 mm × 10 mm) entre lesquelles est tendue une membrane poreuse 12 qui est préalablement imprégnée par la phase organique avant son introduction. La surface de la membrane est de 69 $cm^2$. Deux joints 13 et 14 placés sur le pourtour de la membrane assurent l'étanchéité de l'ensemble.

En haut et en bas de chaque compartiment, est ménagé un orifice qui permet la circulation des phases aqueuses.

La phase aqueuse d'alimentation X entrant par le conduit 16 dans la cavité 10 et sortant par le conduit 15 circule en boucle fermée au moyen d'une pompe à raison de 20 litres/heure. Elle contient du nitrate de samarium et du nitrate de strontium à des concentrations qui sont exprimées dans le tableau II. On met en œuvre dans les différents essais, 150 $cm^3$ de phase aqueuse X.

La membrane liquide Y est obtenu par imprégnation d'une membrane poreuse.

Les membranes poreuses utilisées sont des membranes commercialisées sous la marque Goretex par la Société Gore et sous la marque Celgard par la Société Celanèse.

On a utilisé les membranes suivantes:

— Goretex L 104 16: c'est une membrane poreuse en P.T.E.F. sur support de propylène non tissé ayant un diamètre moyen de pores de 0,5 µm et un volume poreux de 84%.

— Goretex L 111 17: c'est une membrane poreuse ayant la même composition chimique que la précédente mais un diamètre moyen de pores de 0,02 µm et un volume poreux de 50%.

— Celgard 2 500: c'est une membrane poreuse en polypropylène ayant un diamètre poreux de 0,02 µm et un volume poreux de 38%.

— Celgard 4 510: c'est une membrane poreuse en polypropylène renforcé ayant un diamètre de pores de 0,02 µm et un volume poreux de 38%.

La membrane poreuse utilisée est imprégnée à l'aide d'une phase organique contenant un éther-couronne soit le dicyclohexyl-18-C-6 (DC-18-C-6) soit le nonyl-4 benzo-18-C-6 (N-4 B-18-C-6) et un diluant dont la nature est précisée dans le tableau II.

La concentration en éther-couronne de la phase organique est également mentionnée dans ledit tableau.

La solution de réextraction Z entrant par le conduit 18 dans la cavité 11 et sortant par le conduit 17 circule également en boucle fermée à raison de 20 litres/heure. On met en œuvre 150 $cm^3$ de solution de réextraction qui est soit de l'eau désionisée, soit de l'eau contenant de l'E.D.T.A. comme agent complexant.

On détermine la vitesse de transfert des cations $Sr^{2+}$ par unité de surface qui est exprimée en $M \cdot cm^{-2} \cdot s^{-1}$ en effectuant des dosages successifs de la solution de réextraction pendant une durée de 8 heures.

On rassemble les résultats obtenus dans le tableau II.

TABLEAU II

| N° exemple | Phase aqueuse d'alimentation X | Support microporeux 12 | Membrane liquide Y | Solution aqueuse de réextraction Z | Flux de $Sr^{2+}$ | Rapport $\frac{\% Sr^{2+}}{\% Sm^{3+}}$ transférés en 8 heures |
|---|---|---|---|---|---|---|
| 5 | $Sr(NO_3)_2$ 1 M $Sm(NO_3)_3$ 1 M | Goretex L 104 16 | DC-18-C-6 0,1 M $C_2H_2Cl_4$ | $H_2O$ | $4,5 \cdot 10^{-9}$ | |
| 6 | $Sr(NO_3)_2$ 1 M $Sm(NO_3)_3$ 1 M | Goretex L 111 17 | DC-18-C-6 0,1 M $C_2H_2Cl_4$ | $H_2O$ | $1,7 \cdot 10^{-9}$ | 47,5 |
| 7 | $Sr(NO_3)_2$ 0,004 M $Sm(NO_3)_3$ 0,33 M | 2 supports Goretex L 111 17 | DC-18-C-6 0,1 M $C_2H_2Cl_4$ | $H_2O$ | $0,44 \cdot 10^{-9}$ | 184 |
| 8 | $Sr(NO_3)_2$ 1M $Sm(NO_3)_3$ 1 M | Celgard 2 500 | N-4 B-18-C-6 0,1 M Solvesso 150 | $H_2O$ | $0,06 \cdot 10^{-9}$ | > 15 |
| 9 | $Sr(NO_3)_2$ 1 M $Sm(NO_3)_3$ 1 M | Celgard 4 500 | N-4 B-18-C-6 0,1 M Solvesso 150 | EDTA 0,1 M Na OH 0,1 M | $0,18 \cdot 10^{-9}$ | > 30 |

*Exemple 10*

*Procédé de purification d'une solution aqueuse nitrique de terres rares contenant du radium*

On met en œuvre le procédé de purification dans un module à fibres creuses du même type que celui représenté sur la première figure de la demande de brevet français publiée sous le n° 2 451 764.

Le module comprend 3 000 fibres microporeuses en polytétrafluoroéthylène ayant un diamètre interne moyen de 0,75 mm à 1 mm et une longueur de 150 cm. Les fibres présentent des pores ayant un diamètre moyen de 0,01 µm et ont un volume poreux de 50%.

La phase aqueuse nitrique d'alimentation est une solution dont la concentration exprimée en oxydes de terres rares est 500 g/l: lesdits oxydes se répartissant ainsi:

| | | |
|---|---|---|
| $La_2O_3$ | = | 23% |
| $CeO_2$ | = | 46,5% |
| $Pr_6O_{11}$ | = | 5,1% |
| $Nd_2O_3$ | = | 18,4% |
| $Sm_2O_3$ | = | 2,3% |
| $Eu_2O_3$ | = | 0,07% |
| $Gd_2O_3$ | = | 1,7% |
| $Y_2O_3$ | = | 2% |
| autres terres rares | = | 0,93% |

Ladite phase aqueuse contient également $1,6 \cdot 10^{-8}$ g/litre de radium $Ra^{228}$ et $3,5 \cdot 10^{-7}$ g/litre de radium $Ra^{226}$.

La membrane liquide est réalisée par imprégnation des fibres avec une phase organique constituée par un éther-couronne dicyclohexyl-21-C-7 en solution dans le tétrachloroéthane à raison de 0,1 M.

La solution de réextraction est de l'eau désionisée.

Dans le module contenant les fibres imprégnées, on fait circuler en boucle fermée 50 litres de phase aqueuse nitrique à une vitesse de 1500 cm/minute à l'extérieur desdites fibres et simultanément 50 litres d'eau à l'intérieur des fibres à la même vitesse.

Au bord de 5 heures, la concentration en radium $Ra^{228}$ de la solution de terres rares n'est plus que de $1,6 \cdot 10^{-10}$ g/litre et celle en radium $Ra^{226}$ n'est plus que de $3,5 \cdot 10^{-9}$ g/litre.

*Exemple 11*

*Procédé de purification en continu d'une solution nitrique de terres rares contenant du radium*

On réalise cet exemple en suivant le mode de mise en œuvre illustré par la figure 3.

L'appareillage comprend une série de 77 modules du type de celui utilisé dans l'exemple 10.

Les fibres creuses sont imprégnées par une phase organique constituée par un éther-couronne dicyclohexyl-21-C-7 à une concentration de 0,1 M dans le tétrachloroéthane.

La phase aqueuse nitrique d'alimentation est la même que dans l'exemple 10.

La solution de réextraction est de l'eau désionisée.

On introduit à l'entrée du premier module par le conduit 19, la phase aqueuse nitrique avec un débit de 500 l/heure.

On introduit simultanément par le conduit 22, de l'eau désionisée avec un débit de 200 l/heure.

On recueille en sortie du dernier module par le conduit 21, la phase aqueuse nitrique de terres rares ne contenant plus que $1,6 \cdot 10^{-11}$ g/l de radium $Ra^{228}$ et $3,5 \cdot 10^{-10}$ g/l de radium $Ra^{226}$ et par le conduit 20, la solution de réextraction qui contient $4 \cdot 10^{-8}$ g/l de radium $Ra^{228}$ et $8,7 \cdot 10^{-7}$ g/l de radium $Ra^{226}$.

**Revendications**

1. Procédé de purification de solutions aqueuses de sels de terres rarers contenant au moins une terre rare et au moins un alcalino-terreux par extraction liquide-liquide entre une phase aqueuse contenant les sels de ces métaux et une phase organique caractérisé par le fait que l'on met en contact une phase aqueuse nitrique contenant une ou plusieurs terres rares et un ou plusieurs alcalino-terreux avec une phase organique contenant un agent d'extraction de ou des cations alcalino-terreux constitué par au moins un agent solvatant du type polyéther.

2. Procédé de purification de solutions aqueuses de sels de terres rares contenant au moins une terre rare et au moins un alcalino-terreux par extraction liquide-liquide entre une phase aqueuse contenant les sels de ces métaux et une phase organique caractérisé par le fait qu'il consiste:

— à former une membrane liquide avec une phase organique contenant au moins un agent solvatant du type polyéther

— à mettre en contact une face de ladite membrane avec une phase aqueuse nitrique contenant une ou plusieurs terres rares et un ou plusieurs alcalino-terreux

— à mettre en contact l'autre face de la membrane avec une solution de réextraction.

3. Procédé selon l'une des revendications 1 et 2 caractérisé par le fait que l'agent d'extraction est un polyéther cyclique ayant une structure basique cyclique contenant de 6 à 60 atomes de carbone et de 3 à 20 atomes d'oxygène dont au moins deux atomes d'oxygène sont rattachés à des atomes de carbone vicinaux d'un cycle hydrocarboné aromatique ou non et les autres atomes d'oxygène sont liés entre eux par l'intermédiaire de groupement hydrocarbonés comportant au moins deux atomes de carbone.

4. Procédé selon l'une des revendications 1 à 3 caractérisé par le fait que l'agent d'extraction est un polyéther cyclique répondant à la formule (I):

$$\left( R - O \right)_a \quad \text{(I)}$$

dans laquelle a est compris entre 3 et 20, le symbole R représente un radical $-CH_2-CH_2-$ ou $-CH_2-CH_2-CH_2-$ et au moins un radical cyclique choisi parmi les radicaux:

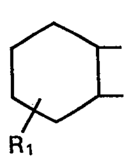

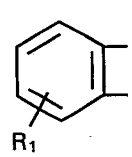

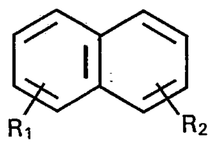

avec $R_1$ et $R_2$ identiques ou différents représentant un atome d'hydrogène ou un ou plusieurs substituants tels qu'un radical alkyle axant de 1 à 12 atomes de carbone, un atome d'halogène, un radical nitro ou hydroxy.

5. Procéde selon la revendication 4 caractérisé par le fait que l'agent d'extraction est un composé de formule (I) dans laquelle a est compris entre 5 et 10, R ayant la signification donnée précédemment, $R_1$ et $R_2$ représentent un atome d'hydrogène ou un radical alkyle ayant de 1 à 9 atomes de carbone.

6. Procédé selon l'une des revendications 1 à 5 caractérisé par le fait que l'agent d'extraction est choisi dans le groupe A, B, C, D ou E, comme configuré dans la description.

7. Procédé selon l'une des revendications 1 à 6 caractérisé par le fait que l'agent d'extraction est le nonyl-4 benzo-18-C-6, le dicyclohexyl-18-C-6, le dibenzo-18-C-6, le nonyl-21-C-7, le dicyclohexyl-21-C-7, le dicyclohexyl-24-C-8.

8. Procédé selon l'une des revendications 2 à 7 caractérisé par le fait que la membrane liquide est formée par imprégnation à l'aide d'une phase organique d'une membrane poreuse ayant des pores fins et continus.

9. Procédé selon la revendication 8 caractérisé par le fait que la membrane poreuse est une membrane de polymères inertes tels que le polypropylène, le polytétrafluoroéthylène, le polydifluorodivinylidène, le polyéthylène, une polysulfone ou l'oxyde de polyphénylène.

10. Procédé selon la revendication 8 caractérisé par le fait que la membrane poreuse présente un volume poreux allant de 10 à 95%.

11. Procédé selon la revendication 10 caractérisé par le fait que la membrane poreuse présente un volume poreux compris entre 20 et 60%.

12. Procédé selon la revendication 8 caractérisé par le fait que la membrane poreuse présente des pores ayant un diamètre moyen allant de 0,01 à 5 µm.

13. Procédé selon la revendication 12 caractérisé par le fait que la membrane poreuse présente des pores ayant un diamètre moyen compris entre 0,02 et 0,5 µm.

14. Procédé selon la revendication 8 caractérisé par le fait que la membrane poreuse présente une épaisseur variant entre 50 et 700 µm.

15. Procédé selon la revendication 14 caractérisé par le fait que la membrane poreuse présente une épaisseur comprise entre 50 et 500 µm.

16. Procédé selon l'une des revendications 8 à 15 caractérisé par le fait que la membrane poreuse est sous la forme de fibres creuses.

17. Procédé selon l'une des revendications 1 à 16 caractérisé par le fait que le diluant organique peut être un hydrocarbure aromatique, un hydrocarbure halogéné, un alcool lourd ayant de 4 à 12 atomes de carbone, tout autre solvant aromatique tels que nitrobenzènes, phénols, diphénols, nitrophénols ou un mélange de ces différents solvants.

18. Procédé selon la revendication 17 caractérisé par le fait que le diluant organique est un hydrocarbure halogéné.

19. Procédé selon la revendication 18 caractérisé par le fait que le diluant organique est le chloroforme ou les tétrachloroéthanes.

20. Procédé selon l'une des revendications 3 à 7 caractérisé par le fait que la concentration en éther-couronne dans le diluant organique varie entre $10^{-3}$ mole/litre et 2 moles/litre.

21. Procédé selon l'une des revendications 1 à 20 caractérisé par le fait que la phase aqueuse nitrique présente une concentration exptimé en oxydes de terres rares comprise entre 20 g/l et 500 g/l.

22. Procédé selon la revendication 21 caractérisé par le fait que la phase aqueuse nitrique présente une acidité comprise entre 0,01 N et 3,0 N.

23. Procédé selon l'une des revendications 1 à 22 caractérisé par le fait que la solution se réextraction est l'eau ou une solution d'un agent complexant.

24. Procédé selon la revendication 23 caractérisé par le fait que l'agent complexant est l'orthophosphate ou le pyrophosphate de sodium ou de potassium, le sulfate de sodium ou un acide aminopolyacétique ou son sel.

25. Procédé selon la revendication 24 caractérisé par le fait que l'agent complexant est l'acide éthylènediaminetétracétique ou son sel.

26. Procédé selon l'une des revendications 23 à 25 caractérisé par le fait que la concentration de l'agent complexant de la solution de réextraction varie entre $10^{-3}$ et 1 mole/litre.

27. Procédé selon l'une des revendications 1 à 26 caractérisé par le fait que la température de transfert des cations se situe entre 10°C et 80°C.

28. Procédé selon la revendication 27 caractérisé par le fait que la température de transfert des cations est la température ambiante.

29. Procédé selon l'une des revendications 2 à 28 caractérisé par le fait que l'on met en contact simultanément une face de la membrane poreuse imprégnée par la phase organique avec une phase aqueuse nitrique contenant les cations à séparer, et l'autre face de ladite membrane avec la solution de réextraction.

30. Application du procédé décrit dans l'une des revendications 1 à 29 à l'élimination du calcium, du baryum et du radium contenus dans les solutions aqueuses résultant de la redissolution par l'acide nitrique, des hydroxydes de terres rares obtenus après attaque sodique de leurs minerais.

**Patentansprüche**

1. Verfahren zur Reinigung wässriger Lösungen von Salzen der Seltenen Erden enthaltend wenigstens ein Seltenes Erdelement und wenigstens ein Erdalkalielement durch Flüssig-Flüssig-Extraktion zwischen einer wässrigen die Salze dieser Metalle enthaltenden Phase und einer organischen Phase, dadurch gekennzeichnet, dass man eine wässrige

Nitratphase enthaltend ein oder mehrere Seltene Erden und ein oder mehrere Erdalkalielemente mit einer organischen Phase in Kontakt bringt, die ein Extraktionsagens für das oder die Erdalkalikationen enthält und aus wenigstens einem solvatisierenden Agens vom Typ Polyether besteht.

2. Verfahren zur Reinigung wässriger Lösungen von Salzen der Seltenen Erden enthaltend wenigstens ein Seltenes Erdelement und wenigstens ein Erdalkalielement durch Flüssig-Flüssig-Extraktion zwischen einer wässrigen Phase, enthaltend die Salze dieser Metalle und einer organischen Phase, dadurch gekennzeichnet, dass es besteht aus:

— der Bildung einer flüssigen Membran mit einer organischen Phase, die wenigstens ein solvatisierenden Agens vom Polyethertyp enthält,

— dem in Kontakt bringen einer Seite dieser Membran mit einer wässrigen Nitratphase enthaltend eine oder mehrere Seltene Erden und ein oder mehrere Erdalkalielemente,

— dem in Kontakt bringen der anderen Seite der Membran mit einer Reextraktions-Lösung.

3. Verfahren nach einem der Ansprüche 1 und 2, dadurch gekennzeichnet, dass das Extraktionsagens ein zyklischer Polyether ist, der eine zyklische Grundstruktur hat, die 6 bis 60 Kohlenstoffatome und 3 bis 20 Sauerstoffatome enthält, von denen wenigstens zwei Sauerstoffatome mit Kohlenstoffatomen verknüpft sind, die einem aromatischen oder nichtaromatischen Kohlenwasserstoffzyklus benachbart sind und die anderen Sauerstoffatome untereinander durch Kohlenwasserstoffgruppen verknüpft sind, die wenigstens zwei Kohlenstoffatome enthalten.

4. Verfahren nach einem der Ansprüche 1 bis 3, dadurch gekennzeichnet, dass das Extraktionsagens ein zyklischer Polyether ist, der der Formel (I) entspricht:

$$-\!\left( R - O \right)_{a}\!- \qquad (I)$$

in der a zwischen 3 und 20 liegt, das Symbol R einen Rest $-CH_2-CH_2-$ oder $-CH_2-CH_2-CH_2-$ darstellt und wenigstens einen zyklischen Rest ausgewählt aus den Resten:

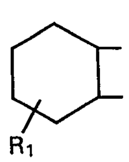

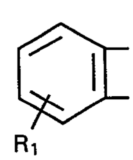

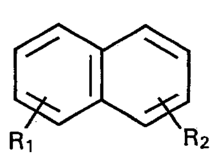

wobei $R_1$ und $R_2$ identisch oder verschieden sind und ein Wasserstoffatom oder ein oder mehrere Substituenten wie Alkylreste mit 1 bis 12 Kohlenstoff atomen, ein Halogenatom, einen Nitro- oder Hydroxyrest darstellen.

5. Verfahren nach Anspruch 4, dadurch gekennzeichnet, dass das Extraktionsagens eine Verbindung der Formel (I) ist, in der a zwischen 5 und 10 liegt, R die oben angegebene Bedeutung hat, $R_1$ und $R_2$ ein Wasserstoffatom oder einen Alkylrest mit 1 bis 9 Kohlenstoffatomen darstellen.

6. Verfahren nach einem der Ansprüche 1 bis 5, dadurch gekennzeichnet, dass das Extraktionsagens ausgewählt wird aus der Gruppe A, B, C, D oder E, wie in der Beschreibung dargestellt.

7. Verfahren nach einem der Ansprüche 1 bis 6, dadurch gekennzeichnet, dass das Extraktionsagens 4-Nonylbenzo-18-C-6, Dicyclohexyl-18-C-6, Dibenzo-18-C-6, 4-Nonylbenzo-21-C-7, Dicyclohexyl-21-C-7, Dicyclohexyl-24-C-8 ist.

8. Verfahren nach einem der Ansprüche 2 bis 7, dadurch gekennzeichnet, dass die flüssige Membran durch Imprägnierung einer porösen Membran mit feinen und durchgehenden Poren mit Hilfe einer organischen Phase gebildet wird.

9. Verfahren nach Anspruch 8, dadurch gekennzeichnet, dass die poröse Membran eine Membran von inerten Polymeren ist, wie Polypropylen, Polytetrafluorethylen, Polydifluordivinyliden, Polyethylen, einem Polysulfon oder Polyphenylenoxid.

10. Verfahren nach Anspruch 8, dadurch gekennzeichnet, dass die poröse Membran ein poröses Volumen von 10 bis 95% aufweist.

11. Verfahren nach Anspruch 10, dadurch gekennzeichnet, dass die poröse Membran ein poröses Volumen zwischen 20 und 60% aufweist.

12. Verfahren nach Anspruch 8, dadurch gekennzeichnet, dass die poröse Membran Poren aufweist, die einen mittleren Durchmesser zwischen 0,01 und 5 µm haben.

13. Verfahren nach Anspruch 12, dadurch gekennzeichnet, dass die poröse Membran Poren aufweist, die einen mittleren Durchmesser zwischen 0,02 und 0,5 µm haben.

14. Verfahren nach Anspruch 8, dadurch gekennzeichnet, dass die poröse Membran eine zwischen 50 und 700 µm variierende Dicke aufweist.

15. Verfahren nach Anspruch 14, dadurch gekennzeichnet, dass die poröse Membran eine Dicke zwischen 50 und 500 µm aufweist.

16. Verfahren nach einem der Ansprüche 8 bis 15, dadurch gekennzeichnet, dass die poröse Membran in Form von Hohlfasern vorliegt.

17. Verfahren nach einem der Ansprüche 1 bis 16, dadurch gekennzeichnet, dass das organische Verdünnungsmittel ein aromatischer Kohlenwasserstoff, ein halogenierter Kohlenwasserstoff, ein schwerer Alkohol mit 4 bis 12 Kohlenstoffatomen, jedes andere aromatische Solvens wie Nitrobenzole, Phenole, Diphenole, Nitrophenole oder ein Gemisch dieser verschiedenen Solvenzien sein kann.

18. Verfahren nach Anspruch 17, dadurch gekennzeichnet, dass das organische Verdünnungsmittel ein halogenierter Kohlenwasserstoff ist.

19. Verfahren nach Anspruch 18, dadurch gekennzeichnet, dass das organische Verdünnungsmittel Chloroform oder ein Tetrachlorethan ist.

20. Verfahren nach einem der Ansprüche 3 bis 7, dadurch gekennzeichnet, dass die Konzentration an Kronenether in dem organischen Verdünnungsmittel zwischen $10^{-3}$ Mol/Liter und 2 Mol/Liter variiert.

21. Verfahren nach einem der Ansprüche 1 bis 20, dadurch gekennzeichnet, dass die wässrige Nitratphase eine Konzentration ausgedrückt in Oxiden von Seltenen Erden zwischen 20 g/l und 500 g/l aufweist.

22. Verfahren nach Anspruch 21, dadurch gekennzeichnet, dass die wässrige Nitratphase eine Acidität zwischen 0,01 N und 3,0 N aufweist.

23. Verfahren nach einem der Ansprüche 1 bis 22, dadurch gekennzeichnet, dass die Reextraktions-Lösung Wasser oder eine Lösung eines komplexierenden Agens ist.

24. Verfahren nach Anspruch 23, dadurch gekennzeichnet, dass das komplexierende Agens Natrium- oder Kalium-Orthophosphat oder Pyrophosphat, Natriumsulfat oder eine Aminopolyessigsäure oder ihr Salz ist.

25. Verfahren nach Anspruch 24, dadurch gekennzeichnet, dass das komplexierende Agens Ethylendiamintetraessigsäure oder ihr Salz ist.

26. Verfahren nach einem der Ansprüche 23 bis 25, dadurch gekennzeichnet, dass die Konzentration an komplexierendem Agens in der Reextraktions-Lösung zwischen $10^{-3}$ und 1 Mol/Liter variiert.

27. Verfahren nach einem der Ansprüche 1 bis 26, dadurch gekennzeichnet, dass die Temperatur des Kationen-Transfers zwischen 10°C und 80°C liegt.

28. Verfahren nach Anspruch 27, dadurch gekennzeichnet, dass die Temperatur des Kationen-Transfers die Raumtemperatur ist.

29. Verfahren nach einem der Ansprüche 2 bis 28, dadurch gekennzeichnet, dass man gleichzeitig eine Seite der porösen mit der organischen Phase imprägnierten Membran mit einer wässrigen Nitratphase in Kontakt bringt, die die zu trennenden Kationen enthält und die andere Seite dieser Membran mit der Reextraktions-Lösung in Kontakt bringt.

30. Verwendung des in einem der Ansprüche 1 bis 29 beschriebenen Verfahrens zur Entfernung des Calciums, Bariums, und des Radiums, die in den wässrigen Lösungen enthalten sind, die bei der Wiederauflösung durch Salpetersäure der nach Natronätzung ihrer Mineralien erhaltenen Hydroxyde von Seltenen Erden erhalten werden.

## Claims

1. Process for purifying aqueous solutions of rare earth salts, containing at least one rare earth and at least one alkaline earth metal, by liquid/liquid extraction between an aqueous phase containing the salts of these metals and an organic phase, characterized in that a nitric aqueos phase containing one or more rare earths and one or more alkaline earth metals is brought into contact with an organic phase containing an extraction agent for the alkaline earth cation or cations consisting of at least one solvating agent of the polyether type.

2. Process for purifying aqueous solutions of rare earth salts, containing at least one rare earth and at least one alkaline earth metal, by liquid/liquid extraction between an aqueous phase containing the salts of these metals and an organic phase, characterized in that it consists in:

— forming a liquid membrane with an organic phase containing at least one solvating agent of the polyether type

— bringing one face of the said membrane into contact with a nitric aqueous phase containing one or more rare earths and one or more alkaline earth metals

— bringing the other face of the membrane into contact with a re-extraction solution.

3. Process according to one of Claims 1 and 2, characterized in that the extraction agent is a cyclic polyether having a cyclic basic structure containing from 6 to 60 carbon atoms and from 3 to 20 oxygen atoms, of which at least two oxygen atoms are attached to vicinal carbon atoms of an aromatic or nonaromatic hydrocarbon ring, and the other oxygen atoms are linked with each other by way of hydrocarbon groups containing at least two carbon atoms.

4. Process acording to one of Claims 1 to 3, characterized in that the extraction agent is a cyclic polyether corresponding to the formula (I):

$$-\!\!\left(R-O\right)_{a}\!\!- \qquad (I)$$

in which a is between 3 and 20, the symbol R denotes a $-CH_2-CH_2-$ or $-CH_2-CH_2-CH_2-$ radical and at least one cyclic radical chosen from the radicals:

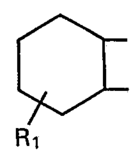

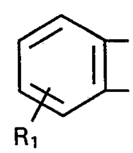

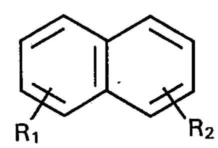

with $R_1$ and $R_2$, which may be identical or different, denoting a hydrogen atom or one or more substituents such as an alkyl radical having from 1 to 12 carbon atoms, a halogen atom or a nitro or hydroxy radical.

5. Process according to Claim 4, characterized in that the extraction agent is a compound of formula (I) in which a is between 5 and 10, R having the meaning given above, $R_1$ and $R_2$ denote a hydrogen atom or an alkyl radical having from 1 to 9 carbon atoms.

6. Process according to one of Claims 1 to 5, characterized in that the extraction agent is chosen from Group A, B, C, D or E as defined structurally in the description.

7. Process according to one of Claims 1 to 6, characterized in that the extraction agent is 4-nonylbenzo-18-C-6, dicyclohexyl-18-C-6, dibenzo-18-C-6, 4-nonylbenzo-21-C-7, dicyclohexyl-21-C-7 or dicyclohexyl-24-C-8.

8. Process according to one of Claims 2 to 7, characterized in that the liquid membrane is formed by impregnating with an organic phase a porous membrane having fine and continuous pores.

9. Process according to Claim 8, characterized in that the porous membrane is a membrane of inert polymers such as polypropylene, polytetrafluoroethylene, polydifluorodivinylidene, polyethylene, a polysulphone or polyphenylene oxide.

10. Process according to Claim 8, characterized in that the porous membrane possesses a pore volume ranging from 10 to 95%.

11. Process according to Claim 10, characterized in that the porous membrane possesses a pore volume of between 20 and 60%.

12. Process according to Claim 8, characterized in that the porous membrane possesses pores having a mean diameter ranging from 0.01 58 5 µm.

13. Process according to Claim 12, characterized in that the porous membrane possesses pores having a mean diameter of between 0.02 and 0.5 µm.

14. Process according to Claim 8, characterized in that the porous membrane possesses a thickness which varies between 50 and 700 µm.

15. Process according to Claim 14, characterized in that the porous membrane possesses a thickness of between 50 and 500 µm.

16. Process according to one of Claims 8 to 15, characterized in that the porous membrane is in the form of hollow fibres.

17. Process according to one of Claims 1 to 16, characterized in that the organic diluent can be an aromatic hydrocarbon, a halogenated hydrocarbon, a heavy alcohol having from 4 to 12 carbon atoms, or any other aromatic solvent such as nitrobenzenes, phenols, diphenols or nitrophenols, or a mixture of these different solvents.

18. Process according to Claim 17, characterized in that the organic diluent is a halogenated hydrocarbon.

19. Process according to Claim 18, characterized in that the organic diluent is chloroform or tetrachloroethanes.

20. Process according to one of Claims 3 to 7, characterized in that the concentration of crown ether in the organic diluent varies between $10^{-3}$ mole/litre and 2 moles/litre.

21. Process according to one of Claims 1 to 20, characterized in that the nitric aqueous phase has a concentration, expressed as rare earth oxides, of between 20 g/l and 500 g/l.

22. Process according to Claim 21, characterized in that the nitric aqueous phase has an acidity of between 0.01 N and 3.0 N.

23. Process according to one of Claims 1 to 22, characterized in that the re-extraction solution is water or a solution of a complexing agent.

24. Process according to Claim 23, characterized in that the complexing agent is sodium orthophosphate or pyrophosphate, potassium orthophosphate or pyrophosphate, or sodium sulphate, or an aminopolyacetic acid or a salt thereof.

25. Process according to Claim 24, characterized in that the complexing agent is ethylenediaminetetraacetic acid or a salt thereof.

26. Process according to one of Claims 23 to 25, characterized in that the concentration of complexing agent in the re-extraction solution varies between $10^{-3}$ and 1 mole/litre.

27. Process according to one of Claims 1 to 26, characterized in that the temperature at which the cations are transferred is between 10°C and 80°C.

28. Process according to Claim 27, characterized in that the temperature at which the cations are transferred is room temperature.

29. Process according to one of Claims 2 to 28, characterized in that one face of the porous membrane impregnated with the organic phase is brought into contact with a nitric aqueous phase containing the cations to be separated, and the other face of the said membrane is simultaneously brought into contact with the reextraction solution.

30. Application of the process described in one of Claims 1 to 29 to the removal of calcium, barium and radium present in the aqueous solutions which result from the re-solution with nitric acid of the rare earth hydroxides obtained after attack of their ores with sodium hydroxide.

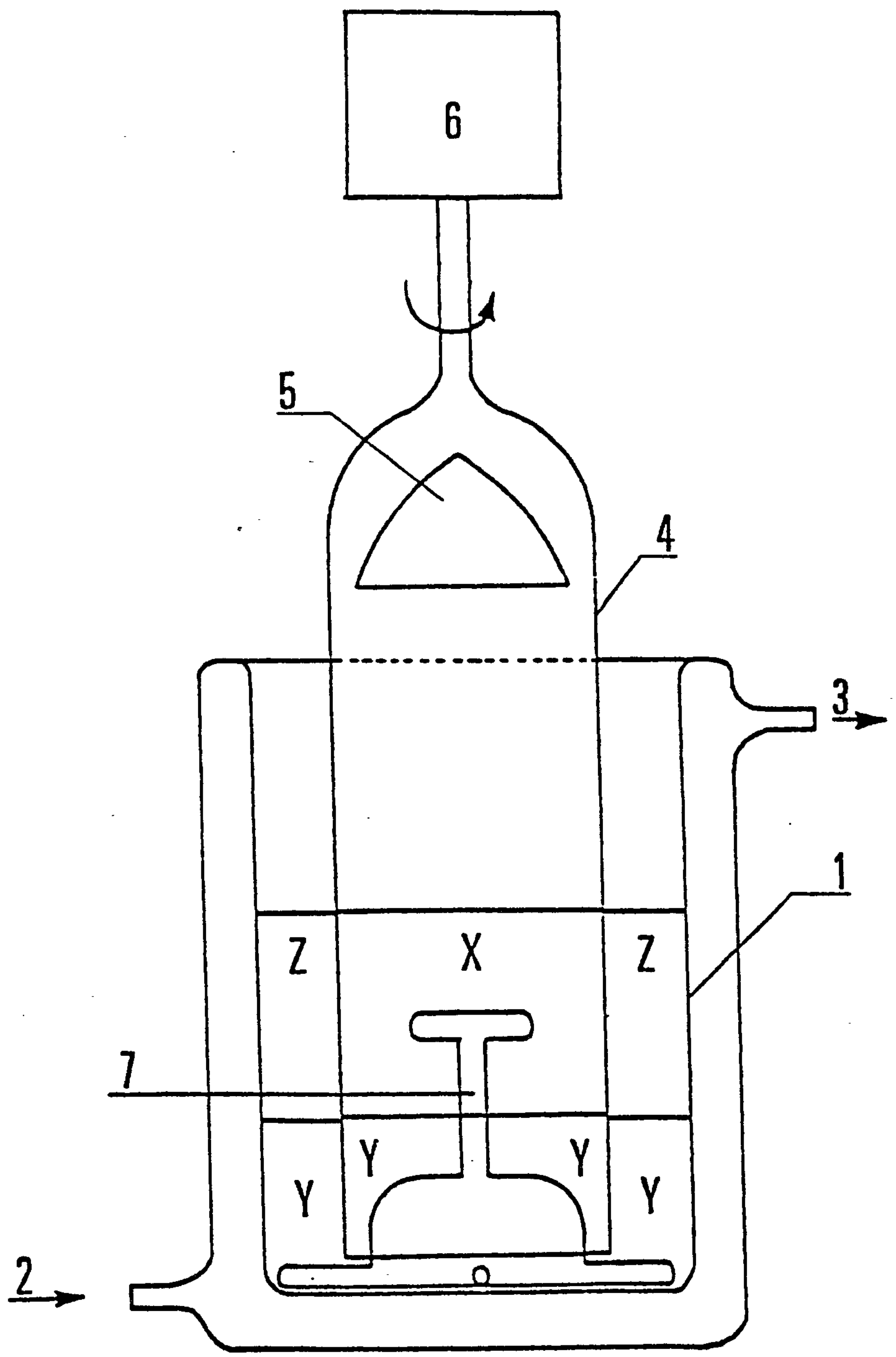


FIG. 1

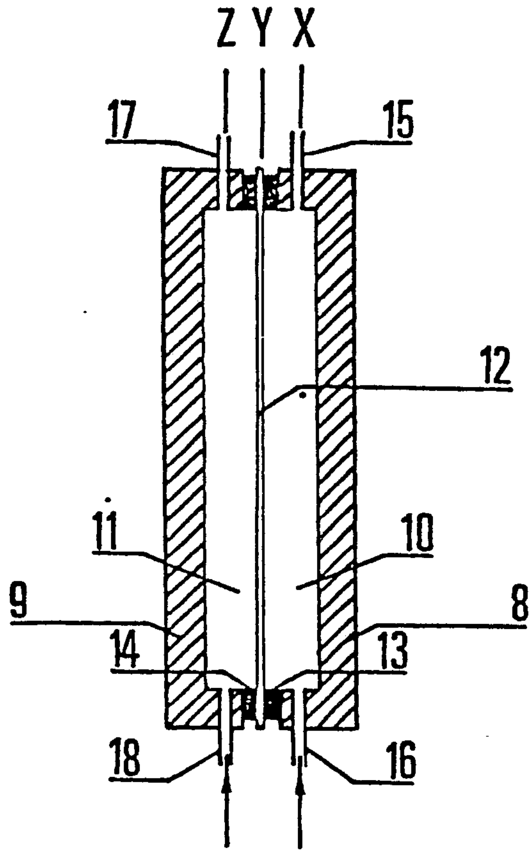


FIG. 2

FIG. 3